# EUROPEAN PATENT SPECIFICATION

(11) **EP 2 581 985 B1**
(45) Date of publication and mention of the grant of the patent: **01.05.2019**
(21) Application number: 12187612.2
(22) Date of filing: 08.10.2012
(51) Int. Cl.: H02G 13/00, H02G 3/08, H01R 4/64, H01R 9/05

(54) **Cable grounding system**
Kabelerdungssystem
Système de mise à la terre de câbles

(30) Priority: 10.10.2011 US 201161545538 P; 09.02.2012 US 201213369790
(43) Date of publication of application: 17.04.2013
(73) Proprietor: TE Connectivity Corporation, Berwyn, PA 19312 (US)
(72) Inventor: Fenstermaker, Daniel C., Kutztown, Pennsylvania 19530 (US); Glatfelter, Kyle Jay, York, Pennsylvania 17404 (US); Gooch, William D., Hamburg, Pennsylvania 19526 (US)
(74) Representative: Johnstone, Douglas Ian

(56) References cited:
- DE-U1- 29 504 646
- US-A- 3 568 128
- US-A- 5 122 068
- US-A1- 2010 178 785
- US-B1- 6 297 447
- US-B1- 6 916 205
- US-B2- 6 548 762

## Description

The subject matter herein relates generally to a system for grounding a cable.

Many types of data communication cables are susceptible to damage from lightning strikes. For example, lightning that strikes the cable or an electronic component that is connected to the cable may cause an overvoltage within the cable or electronic component, which may damage the cable and/or electronic component. Damage to cables that results from lightning strikes may include a break in the conductor of the cable that interrupts the corresponding transmission path of the cable. Lightning strikes may also cause breaks in an insulative structure of the cable (e.g., a wire insulation, an interior support/spacing insulator, and/or a jacket), which may affect the performance or useful life of the cable.

Some known cables are protected from lightning strikes by grounding the cable. More specifically, an outer conductor (e.g. an outer shield, an outer braid, and/or an outer sheath) of the cable is electrically connected to ground. But, at least some known cables are grounded using an electrical contact that exposes interior structures of the cable to the environment. For example, the electrical contact engages, and thereby electrically connects to, an outer conductor of the cable through an opening within the jacket and/or other structures of the cable. The electrical contact is connected to a ground wire to ground the outer conductor of the cable. But, the opening through which the electrical contact engages the outer conductor of the cable exposes interior structures of the cable to the environment, which may damage such interior structures via exposure to heat, cold, moisture, debris, and/or the like. For example, the opening may expose the conductors of the cable (e.g. inner conductors and/or insulated wires), which may interrupt corresponding transmission paths of the cable. Moreover, and for example, the opening may expose insulative structures of the cable, which may affect the performance or useful life of the cable.

A prior art cable grounding system is disclosed in patent US 3568128. The system includes a two-piece plastic housing. The two pieces are clamped together with a screw with a coaxial cable positioned between them. A portion of the cable, with its protective covering removed so as to expose its metal sheath, is positioned in a chamber inside the housing where a two-part clamp is clamped to the metal sheath. The clamp extends through the housing so as to extend therefrom for connection to a ground wire.

US 6548762, on which the preamble of claim 1 is based, discloses a cable grounding system comprising a cable clamp and a cable. The cable has a jacket surrounding a conductor and part of the jacket is removed to expose a portion of the conductor. The cable clamp has a flange extending from a pair of clamp portions and a flat end portion of a grounding line is riveted to the flange. The clamp portions are configured so as to clamp the exposed portion of the conductor, and so as to also clamp the jacket of the cable. A dielectric cover covers the cable clamp and a portion of the grounding line.

Accordingly, the problem to be solved is a need for grounding a cable without exposing interior structures of the cable.

The solution is provided by a cable grounding system comprising: a cable having an outer conductor and a jacket surrounding the outer conductor, the outer conductor comprising an exposed portion that is exposed relative to the jacket; and a cable clamp comprising conductive top and bottom clamps, a dielectric cover, and an electrical contact, the top and bottom clamps clamping the exposed portion of the outer conductor therebetween such that the outer conductor is electrically connected to the top and bottom clamps, the electrical contact being configured to be electrically connected to ground, wherein the dielectric cover covers at least a portion of the top clamp and covers at least a portion of the bottom clamp, the top and bottom clamps clamp a length of the cable that includes the jacket therebetween, and at least one of the top clamp or the bottom clamp comprises a channel that receives a length of the cable that includes the jacket therein, characterised in that the electrical contact includes an opening configured to receive a grounding wire; and the dielectric cover includes a lid to cover the electrical contact when the grounding wire is not received in the opening.

The invention will now be described by way of example with reference to the accompanying drawings in which:
Figure 1 illustrates a cable grounding system formed in accordance with an exemplary embodiment;
Figure 2 is an exploded view of the cable grounding system showing a cable clamp configured to be mounted to a cable;
Figure 3 is a cross-sectional view of the cable grounding system;
Figure 4 is a bottom perspective view of a top clamp of the cable clamp shown in Figure 2;
Figure 5 is a top perspective view of the top clamp shown in Figure 4;
Figure 6 is a bottom perspective view of a bottom clamp of the cable clamp shown in Figure 2;
Figure 7 is a top perspective view of the bottom clamp shown in Figure 6;
Figure 8 illustrates the cable grounding system;
Figure 9 is a bottom perspective view of a top clamp of another cable clamp;
Figure 10 is a top perspective view of the top clamp shown in Figure 9;
Figure 11 is a bottom perspective view of a bottom clamp of the cable clamp of Figure 9;
Figure 12 is a bottom perspective view of the bottom clamp shown in Figure 11;
Figure 13 is a top perspective view of a top clamp of another cable clamp;
Figure 14 is a bottom perspective view of a bottom clamp of the cable clamp of Figure 13;
Figure 15 illustrates the cable clamp made using the top and bottom clamps of Figures 13 and 14;
Figure 16 is a top view of another cable clamp; and
Figure 17 is a side view of the cable clamp of Figure 16.

A cable grounding system is provided which has a cable that has an outer conductor and a jacket surrounding the outer conductor. The outer conductor includes an exposed portion that is exposed relative to the jacket. A cable clamp includes conductive top and bottom clamps, a dielectric cover, and an electrical contact. The top and bottom clamps clamp the exposed portion of the outer conductor therebetween such that the outer conductor is electrically connected to the top and bottom clamps. The electrical contact is configured to be electrically connected to ground. The dielectric cover covers at least a portion of the top clamp and covers at least a portion of the bottom clamp. The top and bottom clamps clamp a length of the cable that includes the jacket therebetween. At least one of the top clamp or the bottom clamp includes a channel that receives a length of the cable that includes the jacket therein. The electrical contact includes an opening configured to receive a grounding wire. The dielectric cover includes a lid to cover the electrical contact when the grounding wire is not received in the opening.

Optionally, the dielectric cover may be an overmold that is molded over the top and bottom clamps. The dielectric cover may cover a seam that extends between the top and bottom clamps. Optionally, the dielectric cover may cover a seam that extends between the jacket of the cable and at least one of the top clamp or the bottom clamp. Optionally, the dielectric cover may cover at least a portion of the jacket of the cable.

Optionally, the opening of electrical contact of the cable clamp may include at least one of a blind hole, a through hole, or a threaded hole to receive the grounding wire. The electrical contact of the cable clamp may be configured to engage the grounding wire. Optionally, the electrical contact of the cable clamp may be exposed through the dielectric cover. At least one of the top clamp or the bottom clamp may include the electrical contact of the cable clamp. Optionally, the electrical contact may include an extension that extends outwardly from at least one of the top clamp or the bottom clamp.

Optionally, at least one of the top clamp or the bottom clamp may include the channel that receives the exposed portion of the outer conductor therein. The cable may further include at least one inner conductor. Optionally, at least one insulation layer may surround the at least one inner conductor, wherein the outer conductor may surround the at least one insulation layer.

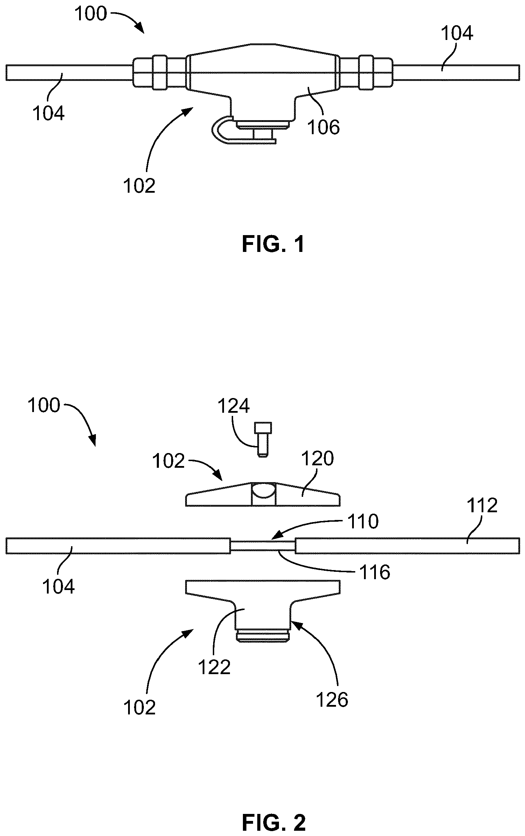

Figure 1 illustrates a cable grounding system 100 formed in accordance with an exemplary embodiment. The cable grounding system 100 includes a cable clamp 102 attached to a cable 104. The cable clamp 102 may be electrically connected to a portion of the cable 104, such as the metallic armor of the cable 104, to create an electrical ground path for the cable 104. The cable clamp 102 may be used for lightning protection. For example, a wire used to ground the cable 104 may be electrically connected to an exposed portion of the cable clamp 102 to electrically ground the cable clamp 102. The cable clamp 102 includes a dielectric cover 106 that provides environmental protection, such as moisture protection to prevent moisture from seeping into the cable clamp 102 along the cable 104.

Figure 2 is an exploded view of the cable grounding system 100 showing the cable clamp 102 configured to be mounted to the cable 104. The cable 104 includes an exposed portion 110. The cable 104 includes an outer jacket 112 surrounding other portions of the cable 104. A portion of the outer jacket 112 is removed (or not included) defining the exposed portion 110. An outer conductor 116 of the cable 104 is exposed at the exposed portion 110. In an exemplary embodiment, the outer conductor 116 is manufactured from a metal material and is electrically conductive. The outer conductor 116 may be a metallic armor of the cable 104. The outer conductor 116 may be a shield of the cable 104. The outer conductor 116 may be a cable braid. The outer conductor 116 may be a sheath. In an exemplary embodiment, the cable 104 has an inner conductor surrounded by an insulator or insulation layer. The outer conductor 116 surrounds the insulator. In one embodiment, the inner conductor is manufactured from a metal material, such as copper and is electrically conductive, thus defining a coaxial cable. Optionally, more than one inner conductor may be provided. In another embodiment, the inner conductor may be a fiber optic conductor transmitting light from one end of the cable 104 to the other end of the cable 104.

The cable clamp 102 includes a top clamp 120 and a bottom clamp 122. The dielectric cover 106 (shown in Figure 1) is configured to surround the top and bottom clamps 120, 122. The top and bottom clamps 120, 122 are conductive, such as metallic, and are configured to define a conductive path between the cable 104 and a grounding wire, when coupled thereto. In the illustrated embodiment, the top and bottom clamps 120, 122 are separate and discrete pieces that are configured to be coupled to one another, such as by a fastener 124. Other fastening means may be used in alternative embodiments to connect the top and bottom clamps 120, 122. In an alternative embodiment, the top and bottom clamps 120, 122 may be integrally formed and may be a one piece body. The top and bottom clamps 120, 122 may be hingedly coupled to one another.

In an exemplary embodiment, the bottom clamp 122 includes an extension 126. The extension 126 is configured to be exposed through the cover 106 such that the grounding wire may be electrically connected to the extension 126. The top clamp 120 may include the extension in alternative embodiments. Both the top and bottom clamps 120, 122 may include extensions or parts of the extension 126 in other alternative embodiments.

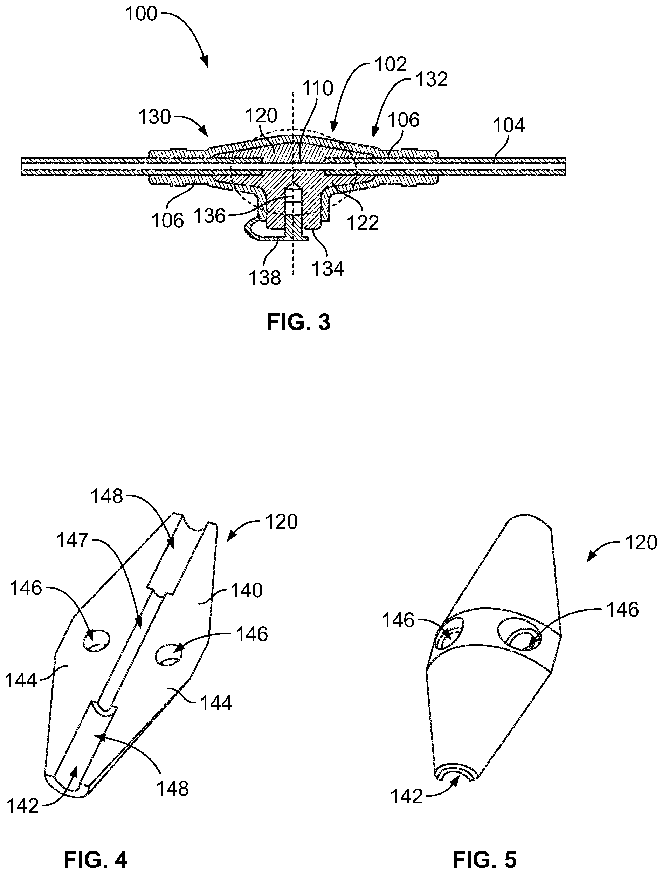

Figure 3 is a cross-sectional view of the cable grounding system 100. The cable 104 is captured between the top and bottom clamps 120, 122. The exposed portion 110 of the cable 104 is electrically connected to the top and bottom clamps 120, 122. For example, the exposed portion 110 may directly and physically engage the top clamp 120 and/or the bottom clamp 122. Optionally, a gel or conductive coating may be positioned between the interface between the exposed portion 110 and the top and bottom clamps 120, 122. In an exemplary embodiment, the outer jacket 112 extends into the ends of the cable clamp 102 for at least a distance.

The cover 106 surrounds portions of the top and bottom clamps 120, 122. In an exemplary embodiment, the top and bottom clamps 120, 122 meet at a seam. The dielectric cover 106 covers the seam to prevent moisture from entering the interior of the cable clamp 102 through the seam. The cover 106 surrounds portions of the cable 104 extending from opposite ends 130, 132 of the cable clamp 102. In an exemplary embodiment, a seam is defined at the interface between the cable 104 and the cable clamp 102. The dielectric cover 106 covers the seam therebetween to prevent moisture from entering the interior of the cable clamp 102 through the seam. The cover 106 may provide strain relief between the cable 104 and the cable clamp 102. The cover 106 seals the ends 130, 132 to prevent moisture from entering the interior of the cable clamp 102. In an exemplary embodiment, the cover 106 may be overmolded over the cable clamp 102 and the wire 104. The cover 106 may be applied or coupled thereto by other means or processes in alternative embodiments. The cover 106 may be heat shrinkable around the cable clamp 102 and/or the cable 104. The cover 106 may be crimped to the cable clamp 102 and/or the cable 104. The cover 106 may include an internal seal extending along the cable 104 to seal the cable clamp 102.

A portion of the extension 126 is exposed through the cover 106. Such exposed portion defines an electrical contact 134 of the extension 126 and is the portion of the outer conductor 116 that defines the electrical connection point between the cable clamp 102, and thus the grounding wire, and the outer conductor 116. The electrical contact 134 is configured to be electrically connected to the grounding wire through the conductive body of the cable clamp 102. In the illustrated embodiment, the extension 126 includes an opening 136 that is configured to receive the grounding wire. The opening 136 is open at the electrical contact 134. The opening 136 may be threaded. The opening 136 may be a blind hole, a through-hole or another type of opening. Optionally, the extension 126 at the opening 136 may be sealed from the environment to ensure that moisture does not seep into the interior of the cable clamp 102. The seal may be provided by the cover 106 or by a sealant applied to the extension at the opening 136, noting that an electrical connection is required between the extension 126 and the grounding wire. Optionally, the cover 106 may be applied to the cable clamp 102 and the grounding wire after the grounding wire is terminated to the extension 126, thus cover a portion of the grounding wire and the interface between the grounding wire and the extension 126.

In an exemplary embodiment, the cover 106 includes a lid 138 that covers at least a portion of the electrical contact 134. The lid 138 is removably coupled to the opening 136. The lid 138 may be removed to provide access to the opening 136.

Figure 4 is a bottom perspective view of the top clamp 120 of the cable clamp 102 (shown in Figure 1). Figure 5 is a top perspective view of the top clamp 120.

The top clamp 120 includes an interior surface 140. The top clamp 120 includes a channel portion 142 that receives the cable 104 (shown in Figure 1). The top clamp 120 includes mounting flanges 144 with mounting openings 146 that receive fasteners (or other components) to secure the top clamp to the bottom clamp 122 (shown in Figure 2). Other mounting means or features may be used in alternative embodiments to secure the top clamp 120 to the bottom clamp 122. Optionally, the exterior of the top clamp 120 may be frustoconical shaped at both ends. Other shapes are possible in alternative embodiments.

The channel portion 142 includes a central section 147 flanked by end sections 148. The central section 147 has a smaller diameter than the end sections 148. The central section 147 is the section that receives the exposed portion 110 (shown in Figure 2) of the cable 104. The end sections 148 are the sections that receive the outer jacket 112 on either end of the exposed portion 110.

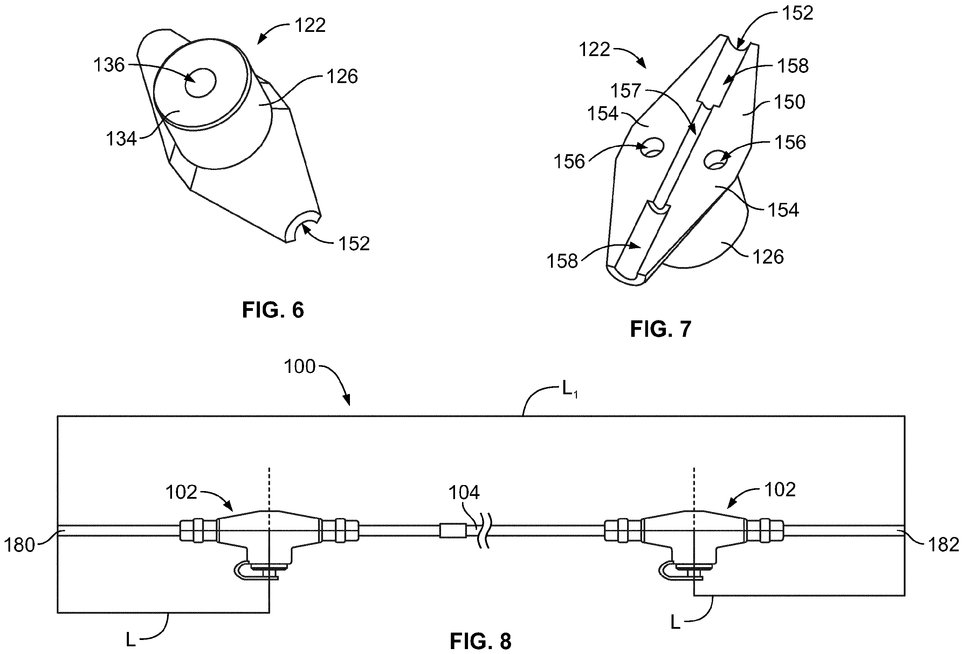

Figure 6 is a bottom perspective view of the bottom clamp 122. Figure 7 is a top perspective view of the bottom clamp 122 shown in Figure 6.

The bottom clamp 122 includes an interior surface 150. The interior surface 150 is configured to rest against the interior surface 140 (shown in Figure 4). The bottom clamp 122 includes a channel portion 152 that receives the cable 104 (shown in Figure 1). The channel portion 152 is configured to be aligned with the channel portion 142 (shown in Figure 4) to form a channel through the cable clamp 102. The bottom clamp 122 includes mounting flanges 154 with mounting openings 156 that receive fasteners (or other components) to secure the bottom clamp 122 to the top clamp 120 (shown in Figure 2). Other mounting means or features may be used in alternative embodiments to secure the bottom clamp 122 to the top clamp 120. Optionally, the exterior of the bottom clamp 122 may be frustoconical shaped at both ends. Other shapes are possible in alternative embodiments.

The channel portion 152 includes a central section 157 flanked by end sections 158. The central section 157 has a smaller diameter than the end sections 158. The central section 157 is the section that receives the exposed portion 110 (shown in Figure 2) of the cable 104. The end sections 158 are the sections that receive the outer jacket 112 on either end of the exposed portion 110.

The extension 126 extends from the exterior of the bottom clamp 122. The extension 126 may be an arm, a tab, a boss, a pad, a finger, a blade or another type of extension. In the illustrated embodiment, the extension 126 is cylindrical in shape. However, other shapes are possible in alternative embodiments. The extension 126 may be generally centrally located. However, the extension may be positioned closer to one end or the other end or may extend outward from one of the ends. The opening 136 is open at the end of the extension 126, which defines the electrical contact 134. The extension extends generally radially outward from the bottom clamp 122, in a direction generally perpendicular with respect to the central axis of the channel portion 152.

Figure 8 illustrates the cable grounding system 100. The cable 104 extends between opposite ends 180, 182. Optionally, multiple cable clamps 102 may be connected to the cable 104. For example, two cable clamps 102 may be provided, each a predetermined distance from the corresponding ends 180, 182. The cable 104 may have any length between the cable clamps 102.

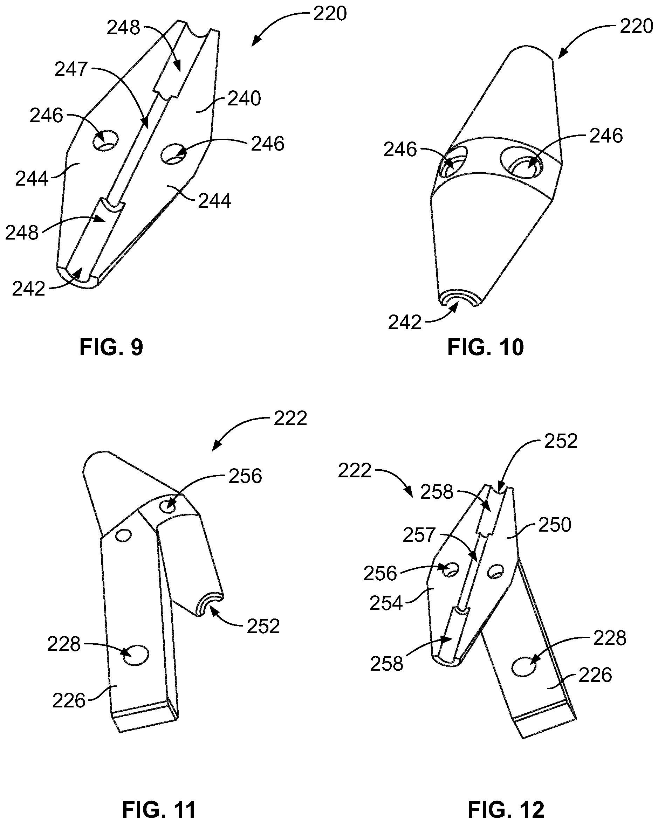

Figure 9 is a bottom perspective view of a top clamp 220 of another cable clamp. Figure 10 is a top perspective view of the top clamp 220. The top clamp 220 may be substantially similar to the top clamp 120 (shown in Figure 4).

The top clamp 220 includes an interior surface 240. The top clamp 220 includes a channel portion 242 that receives a cable, such as the cable 104 (shown in Figure 1). The top clamp 220 includes mounting flanges 244 with mounting openings 246 that receive fasteners (or other components) to secure the top clamp 220 to a bottom clamp 222 (shown in Figure 11). Other mounting means or features may be used in alternative embodiments to secure the top clamp 220 to the bottom clamp 222.

Figure 11 is a bottom perspective view of the bottom clamp 222. Figure 12 is a top perspective view of the bottom clamp 222.

The bottom clamp 222 includes an interior surface 250 that is configured to rest against the interior surface 240 (shown in Figure 9). The bottom clamp 222 includes a channel portion 252 that receives the cable. The bottom clamp 222 includes mounting flanges 254 with mounting openings 256 that receive fasteners (or other components) to secure the bottom clamp 222 to the top clamp 220 (shown in Figure 9). Other mounting means or features may be used in alternative embodiments to secure the bottom clamp 222 to the top clamp 220. Optionally, the exterior of the bottom clamp 222 may be frustoconical shaped at both ends. Other shapes are possible in alternative embodiments.

An extension 226 extends from the exterior of the bottom clamp 222. In the illustrated embodiment, the extension 226 is rectangular in cross-section and extends coplanar with the bottom clamp 222. The extension 226 extends outward from one side at an angular direction with respect to the central axis of the channel portion 252. The extension 226 includes an opening 228 that is configured to receive a grounding wire. The grounding wire may be attached to the extension 226 by other means in alternative embodiments. Part or most of the extension 226 may be covered by a dielectric cover, which may be overmolded or otherwise applied to the cable clamp either before or after the top and bottom clamps 220, 222 are attached together. The dielectric cover is used to seal the channel through the cable clamp that receives the wire

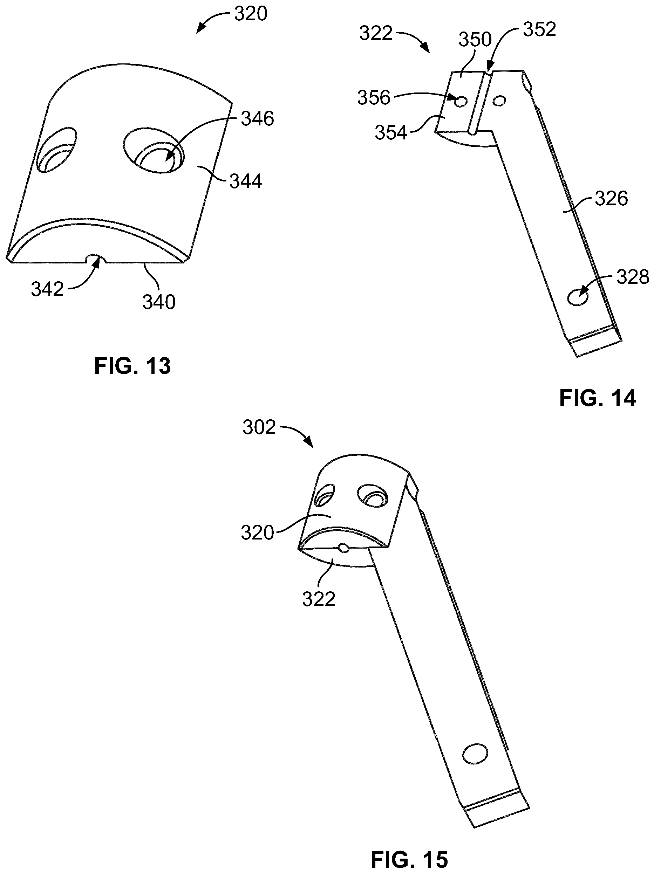

Figure 13 is a top perspective view of a top clamp 320 of another cable clamp 302 (shown in Figure 15). The top clamp 320 includes an interior surface 340. The top clamp 320 includes a channel portion 342 that receives a cable, such as the cable 104 (shown in Figure 1). The top clamp 320 includes mounting flanges 344 with mounting openings 346 that receive fasteners (or other components) to secure the top clamp 320 to a bottom clamp 322 (shown in Figure 14). Other mounting means or features may be used in alternative embodiments to secure the top clamp 320 to the bottom clamp 322. Optionally, the exterior of the top clamp 320 may be a half of a cylinder in shape. Other shapes are possible in alternative embodiments.

Figure 14 is a top perspective view of the bottom clamp 322. The bottom clamp 322 includes an interior surface 350 that is configured to rest against the interior surface 340 (shown in Figure 13). The bottom clamp 322 includes a channel portion 352 that receives the cable. The channel portion 352 may receive the exposed portion 110 (shown in Figure 2) of the cable 104. The bottom clamp 322 includes mounting flanges 354 with mounting openings 356 that receive fasteners (or other components) to secure the bottom clamp 322 to the top clamp 320 (shown in Figure 13). Other mounting means or features may be used in alternative embodiments to secure the bottom clamp 322 to the top clamp 320.

An extension 326 extends from the exterior of the bottom clamp 322. In the illustrated embodiment, the extension 326 is rectangular in cross-section and extends coplanar with the bottom clamp 322. The extension 326 extends outward from one side at an angular direction with respect to the central axis of the channel portion 352. The extension 326 includes an opening 328 that is configured to receive a grounding wire. The grounding wire may be attached to the extension 326 by other means in alternative embodiments. Part or most of the extension 326 may be covered by a dielectric cover, which may be overmolded or otherwise applied to the cable clamp 302.

Figure 15 illustrates the cable clamp 302 made using the top and bottom clamps 320, 322.

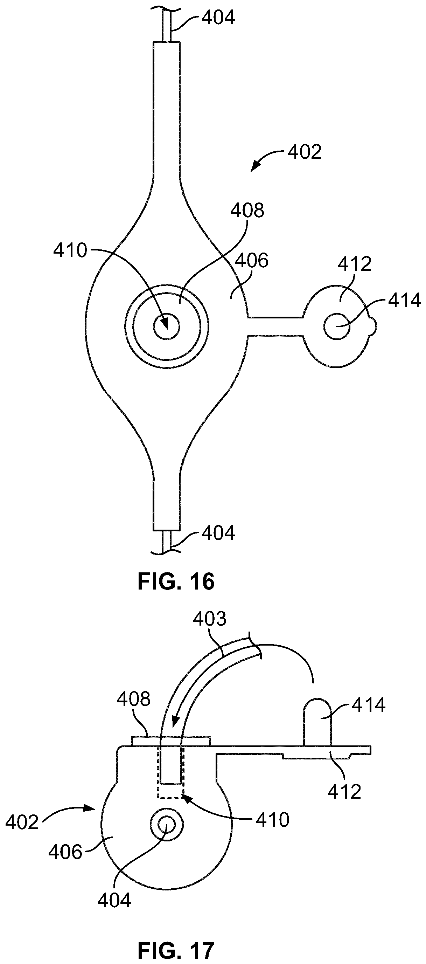

Figure 16 is a top view of another cable clamp 402. Figure 17 is a side view of the cable clamp 402. A grounding wire 403 is coupled to, and is extending from, the cable clamp 402. The cable clamp 402 is connected to a cable 404. The cable clamp 402 electrically connects the cable 404 to the grounding wire 403.

The cable clamp 402 includes a dielectric cover 406 surrounding the metallic clamping portions of the cable clamp 402. The dielectric cover 406 surrounds and extends along portions of the cable 404. The cover 406 seals the cable clamp 402 to the cable 404.

An electrical contact 408 of the cable clamp 402 is exposed through the cover 406. The electrical contact 408 includes an opening 410 that receives the grounding wire 403. The grounding wire 403 is terminated to the electrical contact 408. The grounding wire 403 is mechanically and electrically connected to the electrical contact 408. In the illustrated embodiment, the grounding wire 403 is received in the opening 410.

The cover 406 includes a lid 412 that is configured to cover the electrical contact 408, such as when the grounding wire 403 is not received in the opening 410. The lid 412 is hingedly coupled to the cover 406. The lid 412 is integrally formed with the cover 406. However, it may be a separate component in an alternative embodiment. The lid 412 includes a stem 414 that is configured to be received in the opening 410. The lid 412 may prevent dirt, debris and/or moisture from entering the opening 410.

## Claims

1. A cable grounding system (100) comprising: a cable (104) having an outer conductor (116) and a jacket (112) surrounding the outer conductor (116), the outer conductor (116) comprising an exposed portion (110) that is exposed relative to the jacket (112); and a cable clamp (102) comprising conductive top and bottom clamps (120, 122), a dielectric cover (106), and an electrical contact (134), the top and bottom clamps (120, 122) clamping the exposed portion (110) of the outer conductor (116) therebetween such that the outer conductor (116) is electrically connected to the top and bottom clamps (120, 122), the electrical contact (134) being configured to be electrically connected to ground, wherein the dielectric cover (106) covers at least a portion of the top clamp (120) and covers at least a portion of the bottom clamp (122), the top and bottom clamps (120, 122) clamp a length of the cable (104) that includes the jacket (112) therebetween, and at least one of the top clamp (120) or the bottom clamp (122) comprises a channel (142, 152) that receives a length of the cable (104) that includes the jacket (112) therein,
**characterised in that**
the electrical contact (134) includes an opening (136) configured to receive a grounding wire (403); and
the dielectric cover (106) includes a lid (138) to cover the electrical contact (134) when the grounding wire (403) is not received in the opening (136).

2. The system (100) of claim 1, wherein the dielectric cover (106) is an overmold that is molded over the top and bottom clamps (120, 122).

3. The system (100) of claim 1 or 2, wherein the dielectric cover (106) covers a seam that extends between the top and bottom clamps (120, 122).

4. The system (100) of claim 1, 2 or 3, wherein the dielectric cover (106) covers a seam that extends between the jacket (112) of the cable (104) and at least one of the top clamp (120) or the bottom clamp (122).

5. The system (100) of claim 1, 2 or 3, wherein the dielectric cover (106) covers at least a portion of the jacket (112) of the cable (104).

6. The system (100) of any preceding claim, wherein the opening (136) of the electrical contact (134) of the cable clamp (102) comprises at least one of a blind hole, a through-hole, or a threaded hole configured to receive the grounding wire (403).

7. The system (100) of any one of claims 1 to 5, wherein the electrical contact (134) of the cable clamp (102) is configured to engage the grounding wire (403).

8. The system (100) of any preceding claim, wherein the electrical contact (134) of the cable clamp (102) is exposed through the dielectric cover (106).

9. The system (100) of any preceding claim, wherein at least one of the top clamp (120) or the bottom clamp (122) comprises the electrical contact (134) of the cable clamp (102).

10. The system (100) of any preceding claim, wherein the electrical contact (134) comprises an extension (126) that extends outwardly from at least one of the top clamp (120) or the bottom clamp (122).

11. The system (100) of any preceding claim, wherein the lid (138) is integral with and extends from the dielectric cover (106).

12. The system (100) of any preceding claim, wherein the channel (142, 152) receives the exposed portion (110) of the outer conductor (116) therein.

13. The system (100) of any preceding claim, wherein the cable (104) further includes at least one inner conductor and at least one insulation layer surrounding the at least one inner conductor, wherein the outer conductor (116) surrounds the at least one insulation layer.

## Patentansprüche

1. Kabelerdungssystem (100), das Folgendes umfasst: ein Kabel (104) mit einem Außenleiter (116) und einem den Außenleiter (116) umgebenden Mantel (112), wobei der Außenleiter (116) einen exponierten Abschnitt (110) aufweist, der relativ zum Mantel (112) exponiert ist; und eine Kabelklemme (102), die eine leitende obere und untere Klemme (120, 122), eine dielektrische Abdeckung (106) und einen elektrischen Kontakt (134) aufweist, wobei die obere und untere Klemme (120, 122) den exponierten Abschnitt (110) des Außenleiters (116) zwischen sich einklemmen, so dass der Außenleiter (116) mit der oberen und unteren Klemme (120, 122) elektrisch verbunden ist, wobei der elektrische Kontakt (134) zum elektrischen Verbinden mit Masse konfiguriert ist, wobei die dielektrische Abdeckung (106) wenigstens einen Abschnitt der oberen Klemme (120) bedeckt und wenigstens einen Abschnitt der unteren Klemme (122) bedeckt, wobei die obere und untere Klemme (120, 122) eine den Mantel (112) beinhaltende Länge des Kabels (104) zwischen sich einklemmen, und die obere Klemme (120) und/oder die untere Klemme (122) einen Kanal (142, 152) umfasst/umfassen, der eine Länge des Kabels (104) aufnimmt, die den Mantel (112) beinhaltet,
**dadurch gekennzeichnet, dass**
der elektrische Kontakt (134) eine Öffnung (136) aufweist, die zum Aufnehmen eines Erdungsdrahts (403) konfiguriert ist; und
die dielektrische Abdeckung (106) einen Deckel (138) zum Abdecken des elektrischen Kontakts (134) aufweist, wenn der Erdungsdraht (403) nicht in der Öffnung (136) aufgenommen ist.

2. System (100) nach Anspruch 1, wobei die dielektrische Abdeckung (106) eine Umspritzung ist, die über die obere und untere Klemme (120, 122) geformt ist.

3. System (100) nach Anspruch 1 oder 2, wobei die dielektrische Abdeckung (106) eine Naht abdeckt, die zwischen der oberen und unteren Klemme (120, 122) verläuft.

4. System (100) nach Anspruch 1, 2 oder 3, wobei die dielektrische Abdeckung (106) eine Naht abdeckt, die zwischen dem Mantel (112) des Kabels (104) und der oberen Klemme (120) und/oder der unteren Klemme (122) verläuft.

5. System (100) nach Anspruch 1, 2 oder 3, wobei die dielektrische Abdeckung (106) wenigstens einen Abschnitt des Mantels (112) des Kabels (104) abdeckt.

6. System (100) nach einem vorherigen Anspruch, wobei die Öffnung (136) des elektrischen Kontakts (134) der Kabelklemme (102) wenigstens eines aus einem Blindloch, einem Durchgangsloch oder einem Gewindeloch umfasst, konfiguriert zum Aufnehmen des Erdungsdrahts (403).

7. System (100) nach einem der Ansprüche 1 bis 5, wobei der elektrische Kontakt (134) der Kabelklemme (102) zum Eingreifen in den Erdungsdraht (403) konfiguriert ist.

8. System (100) nach einem vorherigen Anspruch, wobei der elektrische Kontakt (134) der Kabelklemme (102) durch die elektrische Abdeckung (106) exponiert ist.

9. System (100) nach einem vorherigen Anspruch, wobei die obere Klemme (120) und/oder die untere Klemme (122) den elektrischen Kontakt (134) der Kabelklemme (102) umfasst.

10. System (100) nach einem vorherigen Anspruch, wobei der elektrische Kontakt (134) eine Verlängerung (126) aufweist, die sich von der oberen Klemme (120) und/oder der unteren Klemme (122) nach außen erstreckt.

11. System (100) nach einem vorherigen Anspruch, wobei der Deckel (138) einstückig mit der dielektrischen Abdeckung (106) ist und sich von dieser erstreckt.

12. System (100) nach einem vorherigen Anspruch, wobei der Kanal (142, 152) den exponierten Abschnitt (110) des Außenleiters (116) darin aufnimmt.

13. System (100) nach einem vorherigen Anspruch, wobei das Kabel (104) ferner wenigstens einen Innenleiter und wenigstens eine Isolierschicht beinhaltet, die den wenigstens einen Innenleiter umgibt, wobei der Außenleiter (116) die wenigstens eine Isolierschicht umgibt.

## Revendications

1. Système de mise à la terre de câble (100) comprenant : un câble (104) présentant un conducteur externe (116) et une chemise (112) entourant le conducteur externe (116), le conducteur externe (116) comprenant une partie exposée (110) qui est exposée relativement à la chemise (112) ; et un serre-câble (102) comprenant des pinces supérieure et inférieure conductrices (120, 122), un couvercle diélectrique (106) et un contact électrique (134), les pinces supérieure et inférieure (120, 122) serrant la partie exposée (110) du conducteur externe (116) entre elles de telle sorte que le conducteur externe (116) soit connecté électriquement aux pinces supérieure et inférieure (120, 122), le contact électrique (134) étant configuré pour être connecté électriquement à la terre, dans lequel le couvercle diélectrique (106) couvre au moins une partie de la pince supérieure (120) et couvre au moins une partie de la pince inférieure (122), les pinces supérieure et inférieure (120, 122) serrent une longueur du câble (104) qui comporte la chemise (112) entre elles, et au moins une de la pince supérieure (120) ou de la pince inférieure (122) comprend une gorge (142, 152) qui reçoit une longueur du câble (104) qui comporte la chemise (112),
**caractérisé en ce que**
le contact électrique (134) comporte une ouverture (136) configurée pour recevoir un fil de mise à la terre (403) ; et
le couvercle diélectrique (106) comporte un couvercle (138) pour couvrir le contact électrique (134) quand le fil de mise à la terre (403) n'est pas reçu dans l'ouverture (136) .

2. Système (100) selon la revendication 1, dans lequel le couvercle diélectrique (106) est un surmoule qui est moulé par-dessus les pinces supérieure et inférieure (120, 122).

3. Système (100) selon la revendication 1 ou 2, dans lequel le couvercle diélectrique (106) couvre un raccord qui s'étend entre les pinces supérieure et inférieure (120, 122) .

4. Système (100) selon la revendication 1, 2 ou 3, dans lequel le couvercle diélectrique (106) couvre un raccord qui s'étend entre la chemise (112) du câble (104) et au moins une de la pince supérieure (120) ou de la pince inférieure (122).

5. Système (100) selon la revendication 1, 2 ou 3, dans lequel le couvercle diélectrique (106) couvre au moins une partie de la chemise (112) du câble (104).

6. Système (100) selon n'importe quelle revendication précédente, dans lequel l'ouverture (136) du contact électrique (134) du serre-câble (102) comprend au moins un d'un trou aveugle, d'un trou d'interconnexion, ou d'un trou fileté configuré pour recevoir le fil de mise à la terre (403) .

7. Système (100) selon l'une quelconque des revendications 1 à 5, dans lequel le contact électrique (134) du serre-câble (102) est configuré pour se mettre en prise avec le fil de mise à la terre (403).

8. Système (100) selon n'importe quelle revendication précédente, dans lequel le contact électrique (134) du serre-câble (102) est exposé à travers le couvercle diélectrique (106).

9. Système (100) selon n'importe quelle revendication précédente, dans lequel au moins une de la pince supérieure (120) ou de la pince inférieure (122) comprend le contact électrique (134) du serre-câble (102).

10. Système (100) selon n'importe quelle revendication précédente, dans lequel le contact électrique (134) comprend une rallonge (126) qui s'étend vers l'extérieur depuis au moins une de la pince supérieure (120) ou de la pince inférieure (122).

11. Système (100) selon n'importe quelle revendication précédente, dans lequel le couvercle (138) fait partie intégrante du couvercle diélectrique (106) et part de celui-ci.

12. Système (100) selon n'importe quelle revendication précédente, dans lequel la gorge (142, 152) reçoit la partie exposée (110) du conducteur externe (116).

13. Système (100) selon n'importe quelle revendication précédente, dans lequel le câble (104) comporte en outre au moins un conducteur interne et au moins une couche isolante entourant l'au moins un conducteur interne, le conducteur externe (116) entourant l'au moins une couche isolante.
